# EUROPÄISCHE PATENTANMELDUNG

(11) **EP 0 529 525 A1**
(43) Veröffentlichungstag der Anmeldung: **03.03.1993**
(21) Anmeldenummer: 92114298.0
(22) Anmeldetag: 21.08.1992
(51) Int. Cl.: H02G 3/04

(54) **Unterflur-Kanal**

(30) Priorität: 24.08.1991 DE 4128117
(71) Anmelder: SCHMIDT REUTER INGENIEURGESELLSCHAFT mbH & PARTNER KG, D-50823 Köln (DE)
(72) Erfinder: Soethout, Freddie, Dipl.-Ing., W-5024 Pulheim-Dansweiler (DE)
(74) Vertreter: Selting, Günther, Dipl.-Ing.

(57) **Zusammenfassung**

Auf einem Unterboden (10), auf den ein Estrich aufgetragen wird, wird ein Kabelkanal (11) verlegt, der aus mehreren aneinandergesetzten Kanalelementen (27) besteht. Jedes der Kanalelemente (27) ist U-förmig und liegt mit seinen Stützrändern (29) auf dem Unterboden auf, der die untere Begrenzungswand des Kabelkanals bildet. Die aus tiefgezogener Kunststoffolie bestehenden Kanalelemente (27) haben Umfangssicken (33) und sie können sich gegenseitig überlappen, wobei ihre Umfangssicken in gegenseitigen Eingriff kommen.

## Beschreibung

Die Erfindung betrifft einen Unterflur-Kanal für einen mit Estrich zu überdeckenden Unterboden.

Es ist bekannt, innerhalb des Estrichbodens, der auf einem Unterboden, z.B. dem Rohbeton, verlegt wird, Kanäle für Kabel, Schläuche u.dgl. unterzubringen. Die hierfür geeigneten bekannten Kabelkanäle bestehen aus umfangsmäßig geschlossenen rechteckigen Blechkanälen, die in Längsrichtung gegeneinandergesetzt und miteinander verbunden werden. Diese Blechkanäle, in die später die Leitungen eingezogen werden können, sind in verschiedener Hinsicht nachteilig. Sie liegen auf dem häufig aus Rohbeton bestehenden unebenen Unterboden häufig nicht vollflächig auf, wobei die Gefahr besteht, daß sie beim Aufbringen des Estrichs ihre Lage ändern. Ferner ist nicht sichergestellt, daß sämtliche Hohlstellen unterhalb der Blechkanäle mit Estrich voll ausgefüllt werden. Die scharfkantig und rechtwinklig ausgebildeten Blechkanäle erfordern in der Regel eine zweistufige Aufbringung des Estrichs, nämlich einmal bis zur Höhe der Oberwand des Blechkanals und nach Erhärten dieser Estrichschicht zum Zweiten die Aufbringung einer Deckschicht. Würde die Estrichmasse in einem Zuge aufgebracht werden, würden sich durch unterschiedlich schnelles Abbinden längs der Oberkanten des Blechkanals Risse im Estrich bilden. Nachteilig ist weiterhin, daß die Montage der Blechkanäle außerordentlich zeitraubend und schwierig ist, da die einzelnen Kanalelemente auf Maß geschnitten und gegeneinandergesetzt werden müssen. Dies erfordert einen großen Arbeitsaufwand an der Baustelle. Auch das Abdichten der Übergangsstellen von einem Kanalelement zum anderen erfordert zusätzliche Montagearbeiten, wenn der Estrich in Form von dünnflüssigem Fließestrich aufgebracht werden soll.

Aus DE 38 37 056 A1 ist ein Installationskanalsystem bekannt, bei dem aus tiefgezogener Kunststoffolie hergestellte Wellenprofilplatten gegeneinandergesetzt werden, um einen Installationskanal zu bilden. Zwischen den längslaufenden Wellen sind in regelmäßigen Abständen querverlaufende Formkörper ausgebildet, die die längslaufenden Wellen untereinander verbinden, jedoch nicht bis zur Höhe der Oberwand der Wellen reichen. Diese Formkörper bilden nach oben spitz zulaufende Rippen, an denen die das Kanalsystem überdeckende Estrichschicht dünner ist als in den übrigen Bereichen, so daß beim Bohren von Löchern in die Estrichschicht von den Spitzen der Rippen ausgehende Bruchlinien auftreten. Auf diese Weise soll das Ausheben des abgebrochenen Estrichs erleichtert werden. Die in den Tälern zwischen den Wellen angeordneten Formkörper bilden Sicken, deren Funktion ausschließlich darin besteht, Soll-Bruchstellen in dem später aufgebrachten Estrich zu erzeugen.

Aus DE 80 10 670 U1 ist eine Schutzhülle für in Estrichschichten zu verlegende elektrische Leitungen mit den Merkmalen des Oberbegriffs des Patentanspruchs 1 bekannt. Diese Schutzhülle ist durch periodisch als Wellung verlaufende Hohlrippen verstärkt, welche die für eine leichte Verlegbarkeit erforderliche Verformbarkeit bewirken, andererseits aber auch der Schutzhülle die erforderliche Stabilität verleihen. Zur Festlegung der Schutzhülle sind Schellen vorgesehen, die ein gleichartiges Profil wie die Schutzhülle aufweisen und über diese gesetzt werden. Die Schutzhüllen sind nicht dazu bestimmt, mit anderen Schutzhüllen gegeneinandergesetzt zu werden. Vielmehr werden sie in vorgegebener Länge geliefert und den örtlich vorliegen Verhältnissen entsprechend gekürzt.

Der Erfindung liegt die Aufgabe zugrunde, einen Unterflur-Kanal zu schaffen, der kein genaues Abmessen der Kanalelemente erfordert und bei dem Übergangsstellen zu einem benachbarten gleichartigen Kanalelement auf einfache Weise gegen den Estrich abdichtbar sind.

Die Lösung dieser Aufgabe erfolgt erfindungsgemäß mit den im Patentanspruch 1 angegebenen Merkmalen.

Bei dem erfindungsgemäßen Unterflur-Kanal bestehen die Kanalelemente aus flexiblen, unten offenen Schalenkörpern aus Kunststoff, die auf den Unterboden lediglich aufgelegt werden und sich mit ihren Stützrändern auf dem Unterboden abstützen. Diese Schalenkörper weisen in regelmäßigen Abständen angeordnete Umfangssicken auf, wobei die Umfangssicken benachbarter Schalenkörper in einem Überlappungsbereich passend und abdichtend aufeinandergelegt werden können. Dadurch können Schalenelemente zur Bildung eines Kabelkanals so aneinandergesetzt werden, daß sie sich gegenseitig in Längsrichtung überlappen, wobei das eine Schalenelement auf das andere Schalenelement aufgedrückt wird. Hierbei gelangen in den sich überlappenden Bereichen der Kanalelemente die Umfangssicken in gegenseitigen Eingriff, so daß die beiden Kanalelemente gegen Längsverschiebung festgehalten werden. Da die Umfangssicken in regelmäßigen, d.h. gleichen, gegenseitigen Abständen angeordnet sind, kann die Länge des Überlappungsbereichs zweier Kanalelemente im Rastermaß der Umfangssicken beliebig eingestellt werden. Es ist daher nicht unbedingt erforderlich, eines der Kanalelemente oder beide Kanalelemente auf eine bestimmte Länge abzuschneiden. Die Längenabstimmung erfolgt vielmehr durch Wahl des Überdeckungsmaßes. Erforderlichenfalls kann aber auch ein Abschneiden eines der Kanalelemente erfolgen, was einfach mit einem Messer oder einer Schere durchführbar ist, wenn der Schalenkörper aus einer relativ dünnwandigen Folie von etwa 1 bis 2 mm, vorzugsweise etwa 1 bis 1,5 mm, Stärke besteht. Die Umfangssicken haben eine Höhe von etwa 2 bis 10 mm und sie erstrecken sich von einem Stützrand zum anderen.

Infolge seiner Flexibilität paßt sich der Schalenkörper unter dem Gewicht des Estrichmaterials an etwaige Unebenheiten des Unterbodens in Längsrichtung an. Andererseits verleihen die quer zum Kanalelement verlaufenden Umfangssicken dem Schalenkörper eine gewisse Steifigkeit in Querrichtung und auch in der vertikalen Belastungsrichtung. Dagegen hat der Schalenkörper in Längsrichtung eine größere Flexibilität.

Der Schalenkörper braucht lediglich auf den Unterboden aufgelegt zu werden und er kann erforderlichenfalls am Unterboden angeheftet oder fixiert werden, bevor das Estrichmaterial aufgetragen wird. Das Anbringen des Schalenkörpers auf dem Unterboden ist mit geringem Montageaufwand möglich. Vorteilhaft sind ferner das geringe Gewicht und die niedrigen Herstellungskosten für den Schalenkörper, der vorzugsweise aus einem tiefgezogenen Flächenmaterial besteht. Unter Flächenmaterial wird ein blattförmiges Material in Form einer halbstarren Kunststoffolie verstanden, die ursprünglich an allen Stellen die gleiche Stärke hat und durch Tiefziehen verformt wurde.

Die untere Begrenzungswand des mit den Kanalelementen hergestellten Kabelkanals wird von der Oberfläche des Unterbodens gebildet. Hierbei kann es sich entweder um eine Rohbetondecke oder um eine auf der Rohbetondecke angebrachte Ausgleichsschicht, auch in Form von Platten, handeln. Insbesondere, wenn die Estrichschicht in Form von dünnflüssigem Fließestrich aufgebracht wird, ist eine Abdichtung zwischen den Stützrändern der Kanalelemente und der Oberseite des Unterbodens wichtig. Hierzu hat gemäß einer bevorzugten Ausführungsform der Erfindung jedes Kanalelement seitlich abstehende Flansche, die auf dem Unterboden aufliegen können. Diese Flansche können mit Perforationen versehen sein, um sie mit Gips oder Kleber am Unterboden anzuheften. Wird der Oberboden in Form von Streichestrich aufgebracht, reichen bloße Flansche in der Regel bereits aus, um eine Abdichtung in dem erforderlichen Maße zu bewirken.

Im folgenden werden unter Bezugnahme auf die Zeichnungen Ausführungsbeispiele der Erfindung näher erläutert.

Es zeigen:
- Fig. 1: eine schematische perspektivische Darstellung eines Unterbodens mit einem darauf verlegten Kabelkanal und weiteren Komponenten vor Aufbringung des Estrichs,
- Fig. 2: einen Teil-Längsschnitt durch eines der Kanalelemente und
- Fig. 3: eine weitere Ausführungsform eines Kanalelementes.

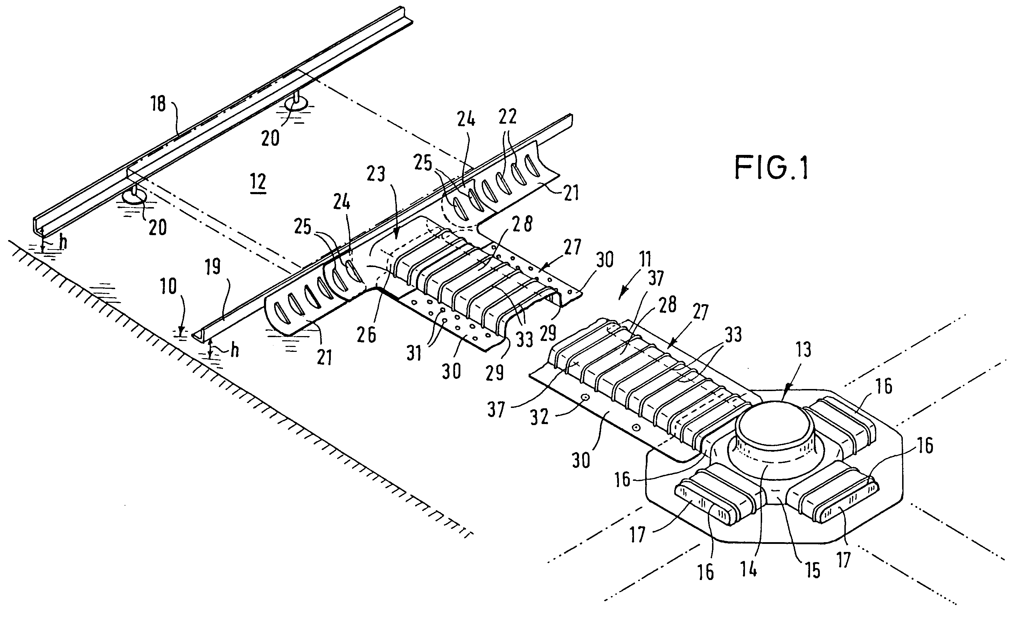

Gemäß Fig. 1 ist auf dem Unterboden 10 ein Kanal 11 für Kabel oder Schläuche verlegt. Dieser Kanal 11 zweigt von einem Hauptkanal 12 ab und führt zu einer Anschlußeinheit 13, die einen senkrecht durch den später aufgebrachten Estrich hindurchgehenden Schacht 14 aufweist und die nach Beendigung der Herstellung des Oberbodens einen Zugang zu dem Kanal 11 ermöglicht. Der Schacht 14 ragt von einem auf dem Unterboden liegenden Hohlkörper 15 auf, von dem sich hohle Anschlußstutzen 16 sternförmig in verschiedene Richtungen erstrecken. Diese Anschlußstutzen stellen umfangsmäßig geschlossene flache Rohrteile dar, die an ihren Enden jeweils durch eine Stirnwand 17 verschlossen sind. Die Stirnwand 17 kann abgenommen oder abgetrennt werden.

Zu beiden Seiten des Hauptkanals 12 verlaufen in einer Höhe h über dem Unterboden 10 parallele Schienen 18 und 19, die auf höhenverstellbaren Stützen 20 ruhen. Der Hauptkanal 12 verläuft beispielsweise unter einem Flur des Gebäudes, und über den Schienen 18,19 werden später die den Flur begrenzenden Wände hergestellt. An der Schiene 19 sind Anschlußstreifen 21 abgestützt, die den mit dem Estrich auszufüllenden Raum zum Hauptkanal 12 hin seitlich begrenzen und die mit ihren Unterkanten auf dem Unterboden 10 ruhen und seitlich an die Schiene 19 angelehnt sind. Diese aus tiefgezogener Kunststofffolie bestehenden Anschlußstreifen 21 haben bogenförmigen Querschnitt, wobei in regelmäßigen Abständen Quersicken 22 von V-förmigem Querschnitt vorgesehen sind. Die Anschlußstreifen 21 können sich gegenseitig überlappen, wobei ihre Quersicken 22 übereinandergedrückt werden.

Das eine Ende des Kanals 11 wird durch ein T-förmiges Anschlußstück 23 gebildet, dessen seitlich abstehende Arme 24 ebenfalls Quersicken 25 aufweisen und mit den Quersicken 22 der angrenzenden Anschlußstreifen 21 verrastet sind. Der Rumpf 26 des Anschlußstückes 23 bildet das tunnelartige Ende des Kanals 11, das zum Hauptkanal 12 hin offen ist. Der Hauptkanal 12 erstreckt sich somit zwischen einem Anschlußstutzen 16 der Anschlußeinheit 13 und dem Anschlußstutzen 26 des Anschlußstücks 23.

Der Kanal 11 besteht aus mehreren gleichartigen, in Längsrichtung aneinandergesetzten Kanalelementen 27. Jedes dieser Kanalelemente 27 weist einen U-förmigen Schalenkörper 28 auf, der mit seiner Öffnung nach unten gerichtet auf den Unterboden 10 aufgelegt ist und sich mit seinen seitlichen Stützrändern 29 auf dem Unterboden 10 abstützt. Die Stützränder 29 sind durchgehend, d.h. sie erstrecken sich über die gesamte Länge des Schalenkörpers 28, wobei sie jedoch erforderlichenfalls höhenmäßige Abstufungen in der Größenordnung der Materialstärke haben können.

Von den Stützrändern 29 erstrecken sich nach außen gerichtete Flansche 30, die einstückige Bestandteile des Folienmaterials sind, aus dem das Kanalelement besteht. Die Flansche 30 liegen auf dem Unterboden 10. Sie können Durchbrechungen 31 aufweisen, um mit einem Mörtel- oder Gipsabstrich an dem Unterboden angeheftet und abgedichtet zu werden. Ferner besteht die Möglichkeit, die Flansche 30 durch Schrauben 32 am Unterboden zu befestigen.

Das tunnelförmige Kanalelement 27 hat an seinem U-förmigen Schalenkörper Umfangssicken 33, die quer zur Längsrichtung des Schalenkörpers verlaufen und sich kontinuierlich über dessen gesamten Umfang erstrecken. Diese Umfangssicken 33 sind abgerundete, etwa halbkreisförmige Ausformungen des Flächenmaterials, die an den Stützrändern 29 enden. Die Umfangssicken bilden Rastsicken, die zwei benachbarte, sich überlappende Kanalelemente gegenseitig verriegeln und umfangsmäßig gegen Eindringen von Estrich abdichten.

Um zwei Kanalelemente 27 miteinander zu verbinden, werden die Enden dieser Kanalelemente aufeinandergelegt und gegeneinandergedrückt. Dabei dringen die Außenseiten der Umfangssicken 33 des unteren Kanalelements in die Innenseiten der Umfangssicken des oberen Kanalelementes ein, so daß beide Kanalelemente in Längsrichtung relativ zueinander fixiert werden. Außerdem wird die Abdichtung zwischen den sich überlappenden Kanalelementen verbessert. Die Kanalelemente werden somit dachpfannenähnlich überlappend aneinandergefügt, wobei das Überlappungsmaß im Abstandsmaß der Umfangssicken 33 beliebig verändert werden kann. Wenn eine Feinabstimmung des Längenmaßes erforderlich ist, werden Kanalelemente benutzt, bei denen die gegenseitigen Abstände der Umfangssicken so gering wie möglich sind, d.h. etwa gleich groß wie die Breite der Umfangssicken. Entsprechende Umfangssicken, die mit den Umfangssicken 33 der Kanalelemente 27 zusammenwirken, können auch an den Anschlußstücken 16 und 26 vorhanden sein, auf die die angrenzenden Kanalelemente 27 ebenfalls aufgesetzt werden bzw. unter die sie gesetzt werden.

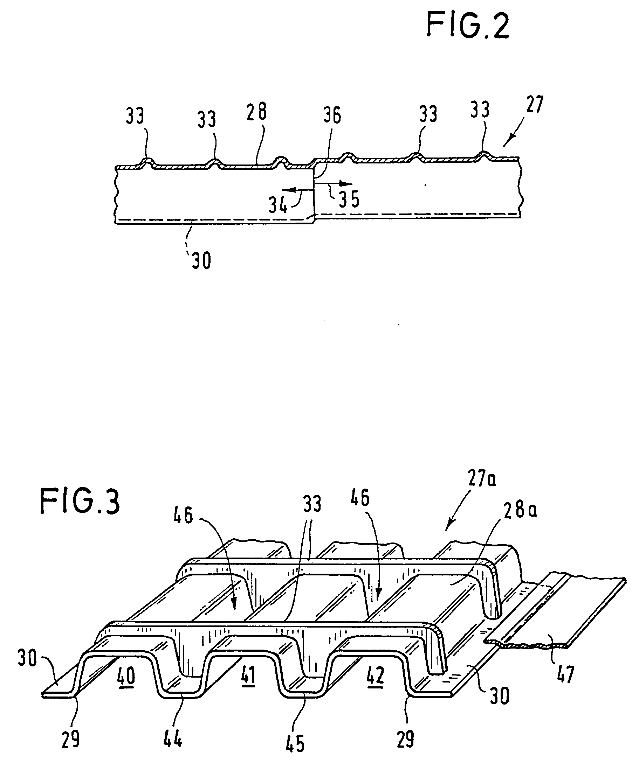

Damit die Kanalelemente 27 ohne wesentliche Verformung überlappend aufeinandergesetzt werden können, hat der Schalenkörper 28 eines jeden Kanalelementes gemäß Fig. 2 einen ersten Längenbereich 34 von geringerem Querschnitt und einen zweiten Längenbereich 35 von größerem Querschnitt, wobei die Außenkontur des ersten Längenbereichs 34 im wesentlichen der Innenkontur des zweiten Längenbereiches 35 entspricht. Dadurch ist es möglich, den ersten Längenbereich 34 eines Kanalelementes auf den zweiten Längenbereich 35 eines benachbarten Kanalelementes, ohne wesentliche Materialspannungen zu erzeugen, aufzusetzen. Der Übergang 36 zwischen den beiden Längenbereichen 34 und 35 ist in Fig. 2 stufenförmig. Es besteht auch die Möglichkeit, einen nicht-stufenförmigen gleitenden Übergang vorzusehen oder auch die Querschnittskontur über die gesamte Länge des Kanalelementes kontinuierlich zu vergrößern. Wenn der Übergang in einem bestimmten Bereich konzentriert ist, sollte er sich zweckmäßigerweise etwa in der Mitte der Länge des Kanalelementes befinden, weil dann das Überlappungsmaß in einem weiten Bereich gewählt werden kann.

Wie aus Fig. 1 ersichtlich ist, sind die oberen Längskanten 37 des Schalenkörpers 28 abgerundet oder abgeschrägt. Dadurch wird vermieden, daß in dem später aufgebrachten Estrichmaterial durch Schrumpfung Risse an diesen Längskanten auftreten.

Wenn die Estrichmasse in Form von Fließestrich aufgebracht wird, kann es zweckmäßig sein, an den Unterseiten der Flansche 30 kompressible Dichtungsbänder aus Schaumstoffmaterial u.dgl. anzubringen, die eine Abdichtung gegenüber dem Unterboden bewirken. Das in Fig. 3 dargestellte Kanalelement 27a unterscheidet sich von demjenigen des ersten Ausführungsbeispiels dadurch, daß der Schalenkörper 28 drei längslaufende Kanäle 40,41,42 bildet, die durch Stützfüße 44 voneinander getrennt sind. Diese Kanäle 40,41,42 dienen zur getrennten Unterbringung verschiedenartiger elektrischer Leitungen, beispielsweise von Starkstrom-Versorgungskabeln und Datenleitungen, die räumlich getrennt voneinander verlegt werden müssen. Die Tragfüße 44 erstrecken sich generell über die gesamte Länge des Schalenkörpers 28a, sind jedoch durch die jeweiligen Umfangssicken 33 unterbrochen. Die Tragfüße 44 und 45 reichen bis auf den Unterboden, also bis zur Höhe der seitlichen Stützränder 29, und sie bilden an ihrer Ober- oder Rückseite Vertiefungen 46. Die Umfangssicken 33 überspannen sämtliche Kanäle 40,41,42 und sie erstrecken sich quer durch die von den Stützfüßen 44,45 gebildeten Vertiefungen 46. Die Seitenwände der Stützfüße 44 und 45 verlaufen V-förmig, ebenso wie die Seitenwände des gesamten Schalenkörpers nach außen und unten schräg verlaufen, so daß Bereiche zweier Schalenkörper hohlraumfrei übereinandergestapelt werden können. Entsprechendes gilt auch für die Wände der Umfangssicken 33 in den Bereichen der Vertiefungen 46.

Zur Abdichtung gegenüber dem umgebenden Estrich sind an den Flanschen 30 sich an den Unterboden 10 anschmiegende weiche Folien 47 angebracht, die nach Art von Lappen frei von den Flanschen 30 abstehen.

Eine weitere Möglichkeit besteht darin, den gesamten Unterboden mit einer durchgehenden Schicht aus Folie oder Platten mit glatter Oberfläche zu belegen und die Flansche des Kanalelements, z.B. mit darunter angebrachten Klebestreifen, an diese Schicht anzukleben.

## Patentansprüche

1. Unterflur-Kanal für einen mit Estrich zu überdeckenden Unterboden (10), bestehend aus Kanalelementen (27) aus flexiblen, mindestens an den Endbereichen unten offenen Schalenkörpern (28) aus Kunststoff, deren Seitenwände durchgehende Stützränder (29) zum Aufsetzen auf den Unterboden (10) aufweisen und die in regelmäßigen Abständen angeordnete Sicken haben, welche sich kontinuierlich als Umfangssicken (33) über die Oberseite und die Seitenwände erstrecken,
**dadurch gekennzeichnet,**
daß jeweils aneinandergrenzende Kanalelemente (27) einander überlappend derart aufeinandergesetzt sind, daß ihre Umfangssicken abdichtend ineinandergreifen, wobei im Überlappungsbereich die Innenkontur des oberen Kanalelements der Außenkontur des unteren Kanalelements im wesentlichen entspricht.

2. Unterflur-Kanal nach Anspruch 1, dadurch gekennzeichnet, daß der langgestreckte Schalenkörper (28) mindestens einiger Kanalelemente einen sich über mindestens eine Umfangssicke (33) erstreckenden ersten Längenbereich (34) von geringerem Querschnitt und einen zweiten Längenbereich (35) von größerem Querschnitt aufweist, wobei die Außenkontur des ersten Längenbereichs (34) im wesentlichen der Innenkontur des zweiten Längenbereichs (35) entspricht.

3. Unterflur-Kanal nach Anspruch 1 oder 2, dadurch gekennzeichnet, daß der Schalenkörper (28) der Kanalelemente (27) angrenzend an die Stützränder (29) seitlich abstehende Flansche (30) aufweist.

4. Unterflur-Kanal nach Anspruch 3, dadurch gekennzeichnet, daß die Flansche (30) mit Durchbrechungen (31) versehen sind.

5. Unterflur-Kanal nach Anspruch 3 oder 4, dadurch gekennzeichnet, daß die Flansche (30) mit einem Klebe- oder Dichtungsband unterlegt sind.

6. Unterflur-Kanal nach einem der Ansprüche 1-5, dadurch gekennzeichnet, daß an den Stützrändern (29) oder den Flanschen (30) der Kanalelemente (27) eine sich an den Unterboden anschmiegende weiche Folie (47) angebracht ist.

7. Unterflur-Kanal nach einem der Ansprüche 1-6, dadurch gekennzeichnet, daß die Umfangssicken (33) benachbarter Kanalelemente (27) als ineinanderpassende und sich verklemmende Schnapprillen ausgebildet sind.

8. Unterflur-Kanal nach einem der Ansprüche 1-7, dadurch gekennzeichnet, daß die gegenseitigen Abstände der Umfangssicken (33) der Kanalelemente (27) etwa gleich groß sind wie ihre Breite.

9. Unterflur-Kanal nach einem der Ansprüche 1-8, dadurch gekennzeichnet, daß die oberen Längskanten (37) der Schalenkörper (28) abgerundet oder abgeschrägt sind.

10. Unterflur-Kanal nach einem der Ansprüche 1-9, dadurch gekennzeichnet, daß die Schalenkörper (28a) der Kanalelemente (27a) mehrere durch mindestens einen längslaufenden ausgeformten Stützfuß (44,45) unterteilte Kanäle (40,41,42) aufweist und daß die Umfangssicken (33) die Kanäle (40,41,42) überspannen und sich quer durch die von dem Stützfuß (44,45) gebildete Vertiefung (46) erstrecken.

11. Unterflur-Kanal nach Anspruch 10, dadurch gekennzeichnet, daß die Seitenwände des Stützfußes (44,45) V-förmig verlaufen.

12. Unterflur-Kanal nach einem der Ansprüche 1-11, dadurch gekennzeichnet, daß die Kanalelemente (27) aus tiefgezogenem Flächenmaterial bestehen.
